# EUROPEAN PATENT SPECIFICATION

(11) **EP 2 995 032 B1**
(45) Date of publication and mention of the grant of the patent: **05.09.2018**
(21) Application number: 14716773.8
(22) Date of filing: 28.03.2014
(51) Int. Cl.: H04L 5/00

(54) **EFFICIENT SOUNDING REFERENCE SIGNAL (SRS) SYMBOL USAGE FOR SOUNDING AND DATA**
EFFIZIENTE SRS-SYMBOLVERWENDUNG FÜR DURCHSCHALLUNG UND DATEN
UTILISATION EFFICACE D'UN SYMBOLE D'UN SIGNAL DE RÉFÉRENCE DE SONDAGE (SRS) POUR LE SONDAGE ET LES DONNÉES

(30) Priority: 09.05.2013 US 201313890678
(43) Date of publication of application: 16.03.2016
(73) Proprietor: Nokia Solutions and Networks Oy, 02610 Espoo (FI)
(72) Inventor: LINDHOLM, Jari Olavi, FI-01940 Palojoki (FI); LUNTTILA, Timo Erkki, FI-02200 Espoo (FI); TIIROLA, Esa Tapani, FI-90450 Kempele (FI); HOOLI, Kari Juhani, FI-90540 Oulu (FI)
(74) Representative: Nokia EPO representatives
(86) International application number: PCT/EP2014/056241
(87) International publication number: WO 2014/180601

(56) References cited:
- EP-A1- 2 538 738
- EP-A2- 2 536 047
- WO-A1-2011/102768
- WO-A1-2012/088876
- WO-A1-2013/025147

## Description

### BACKGROUND:

### Field:

Embodiments of the invention generally relate to mobile communications networks, such as, but not limited to, the Universal Mobile Telecommunications System (UMTS) Terrestrial Radio Access Network (UTRAN), Long Term Evolution (LTE) Evolved UTRAN (E-UTRAN), and/or LTE-A.

### Description of the Related Art:

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN), no RNC exists and most of the RNC functionalities are contained in the enhanced Node B (eNodeB or eNB).

Long Term Evolution (LTE) or E-UTRAN refers to improvements of the UMTS through improved efficiency and services, lower costs, and use of new spectrum opportunities. In particular, LTE is a 3GPP standard that provides for uplink peak rates of at least 50 megabits per second (Mbps) and downlink peak rates of at least 100 Mbps. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for high-speed data and media transport in addition to high-capacity voice support. Advantages of LTE include, for example, high throughput, low latency, FDD and TDD support in the same platform, an improved end-user experience, and a simple architecture resulting in low operating costs.

Further releases of 3GPP LTE (e.g., LTE Rel-10, LTE Rel-11, LTE Rel-12) are targeted towards future international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A is a more optimized radio system fulfilling the international telecommunication union-radio (ITU-R) requirements for IMT-Advanced while keeping the backward compatibility. Documents WO2011/102768 and EP2536047 discuss allocating uplink data.

### SUMMARY:

The invention is solely defined by the appended claims 1-5. In the following, references to embodiments not falling within the scope of the claims are to be understood as examples useful for understanding the invention.

Another exemplary aspect is directed to an apparatus including at least one processor and at least one memory comprising computer program code. The at least one memory and the computer program code are configured, with the at least one processor, to cause the apparatus at least to incorporate, into an uplink grant message, information on whether a last symbol of an uplink subframe is used for physical uplink shared channel (PUSCH), for sounding reference signal (SRS), or is empty, and to transmit the uplink grant message comprising the information on the last symbol to a user equipment (UE).

Another exemplary aspect is directed to an apparatus including means for incorporating, into an uplink grant message, information on whether a last symbol of an uplink subframe is used for physical uplink shared channel (PUSCH), for sounding reference signal (SRS), or is empty. The apparatus may also include means for transmitting the uplink grant message comprising the information on the last symbol to a user equipment (UE).

Another exemplary aspect is directed to a computer program, embodied on a non-transitory computer readable medium. The computer program is configured to control a processor to perform a process. The process includes incorporating into an uplink grant message information on whether a last symbol of an uplink subframe is used for physical uplink shared channel (PUSCH), for sounding reference signal (SRS), or is empty, and transmitting the uplink grant message comprising the information on the last symbol to a user equipment.

An exemplary aspect is directed to a method including receiving, by a user equipment, an uplink grant message comprising information indicating whether a last symbol of an uplink subframe is used for physical uplink shared channel (PUSCH), for sounding reference signal (SRS), or is empty. The method also includes determining from the received information whether the last symbol is available for physical uplink shared channel (PUSCH), or is used for sounding reference signal (SRS) transmission, or is left empty. The user equipment is configured to ignore cell specific SRS subframe configuration when determining whether the last symbol of the uplink subframe is available for transmission of PUSCH, SRS, or is left empty.

Another exemplary aspect is directed to an apparatus including at least one processor and at least one memory comprising computer program code. The at least one memory and the computer program code are configured, with the at least one processor, to cause the apparatus at least to receive an uplink grant message comprising information indicating whether a last symbol of an uplink subframe is used for physical uplink shared channel (PUSCH), for sounding reference signal (SRS), or is empty, and to determine from the received information whether the last symbol is available for physical uplink shared channel (PUSCH), or is used for sounding reference signal transmission, or is left empty. The apparatus is configured to ignore cell specific SRS subframe configuration when determining whether the last symbol of the uplink subframe is available for transmission of PUSCH, SRS, or is left empty.

Another exemplary aspect is directed to an apparatus including means for receiving an uplink grant message comprising information indicating whether a last symbol of an uplink subframe is used for physical uplink shared channel (PUSCH), for sounding reference signal (SRS), or is empty. The apparatus may also include means for determining from the received information whether the last symbol is available for physical uplink shared channel (PUSCH), or is used for sounding reference signal transmission, or is left empty. The apparatus may be configured to ignore cell specific SRS subframe configuration when determining whether the last symbol of the uplink subframe is available for transmission of PUSCH, SRS, or is left empty.

Another exemplary aspect is directed to a computer program, embodied on a non-transitory computer readable medium. The computer program is configured to control a processor to perform a process. The process includes receiving an uplink grant message comprising information indicating whether a last symbol of an uplink subframe is used for physical uplink shared channel (PUSCH), for sounding reference signal (SRS), or is empty. The process also includes determining from the received information whether the last symbol is available for physical uplink shared channel (PUSCH). The determining comprises ignoring cell specific SRS subframe configuration when determining whether the last symbol of the uplink subframe is available for transmission of PUSCH, SRS, or is left empty.

### BRIEF DESCRIPTION OF THE DRAWINGS:

For proper understanding of the invention, reference should be made to the accompanying drawings, wherein:
Fig. 1 illustrates an example of the uplink frame structure, according to an embodiment;
Fig. 2a illustrates an example of an apparatus, according to one embodiment;
Fig. 2b illustrates an example of an apparatus, according to another embodiment;
Fig. 3a illustrates a flow chart of a method, according to one embodiment; and
Fig. 3b illustrates a flow chart of a method, according to another embodiment.

### DETAILED DESCRIPTION:

It will be readily understood that the components of the invention, as generally described and illustrated in the figures herein, may be arranged and designed in a wide variety of different configurations. Thus, the following detailed description of the embodiments of systems, methods, apparatuses, and computer program products for controlling sounding reference signal (SRS) transmission, as represented in the attached figures, is not intended to limit the scope of the invention, but is merely representative of selected embodiments of the invention.

If desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

The 3GPP RAN1 study item entitled, "Small Cell Enhancements for E-UTRA and E-UTRAN - Physical-layer Aspects" has an objective of identifying potential enhancements for LTE physical layer operation in a small cell environment. The study item description mentions that spectral efficiency improvements related to overhead reduction of user specific reference signals should be studied. In LTE uplink, two types of reference signals are defined: demodulation reference signals and sounding reference signals (SRS). Embodiments of the present invention provide an enhancement related to sounding reference signals, for example, in a small cell environment.

Currently, in the 3GPP Release 11 specification, if the subframe is configured as a cell specific SRS subframe, when the UE transmits physical uplink shared channel (PUSCH), it must puncture last single carrier frequency division multiple access (SC-FDMA) symbol of the subframe regardless of whether the UE actually transmits SRS or not.

As will be outlined in detail below, certain embodiments provide a more efficient way to control SRS transmission such that more bandwidth may become available for PUSCH transmission. More specifically, an embodiment allows eNB control of SRS transmission on a per UE basis rather than on a per cell basis, and enables resources that are reserved by default for PUSCH transmission to be used for SRS.

An LTE small cell environment can be characterized as having following properties: UE(s) are close to the eNB, for example the distance between the eNB and UE(s) is significantly shorter than in a macro cell environment and, consequently, the uplink (UL) path loss is lower than in the larger cells; UE(s) attached to a small cell can be assumed to be low to moderate speed only (high speed UEs are served by macro cell); number of UE(s) served by the small cell is low; and/or number of active UE(s) may change quickly

Channel conditions can be expected to be more stable and channel coherence bandwidth larger in a small cell when compared to a macro cell. As a result, continuous and frequent sounding of the channel is not needed in a small cell (UL interference characteristics can be measured at the eNB side also without sounding signal).

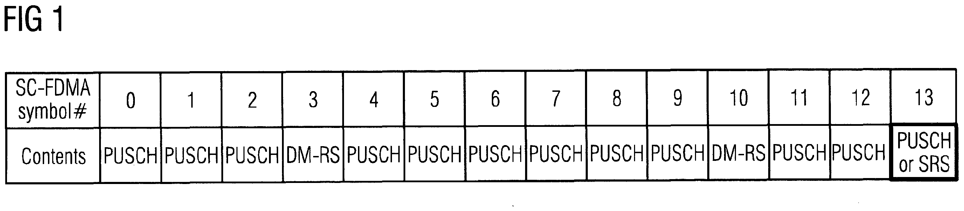

Fig. 1 illustrates an example of UL frame structure in LTE Releases 8 to 11, according to one example. In the following, this may also be referred to as a subframe. The last SC-FDMA symbol (e.g., symbol #13) can be configured for SRS, in which case PUSCH is punctured. Currently, as illustrated in Fig. 1, when the UE transmits PUSCH, it must puncture the last SC-FDMA symbol (e.g., symbol #13) of the subframe if the subframe is configured as cell specific SRS subframe regardless of whether the UE actually transmits SRS or not. The cell-specific configuration of SRS transmission opportunities is periodic even with aperiodic SRS transmission, meaning that SC-FDMA symbols are reserved deterministically in every nth subframe, even if the need for transmitting SRS occurs only every now and then.

Furthermore, SRS transmission bandwidth is configurable and UE-specific SRS may occupy almost the whole UL band or just a few physical resource blocks (PRBs). Often, especially if SRS load in the cell is low, PUSCH transmission does not collide with simultaneous narrow band SRS transmission, and then puncturing of PUSCH is unnecessary.

With the Release 11 specification, the allocation of the last subframe symbol to either PUSCH or SRS is part of cell configuration. The SRS resources need to be dimensioned to facilitate the highest expected number of active UEs. In a small cell environment, such burst of UEs occurs only occasionally and SRS load is frequently low. Then, a significant portion of resource elements on the last symbol are not used for PUSCH or SRS. Unnecessary puncturing of the last symbol of the PUSCH results in loss in spectral efficiency as 1/12 of the PUSCH resources are lost. Therefore, an efficient method to allocate last symbol of the subframe for PUSCH or SRS would be beneficial.

When considering SRS transmission configuration for the small cell case, an objective may be that a reduction in SRS transmissions can be translated to more efficient PUSCH transmission. Accordingly, certain embodiments provide that the last symbol of the subframe can be flexibly used for PUSCH or for SRS. In one embodiment, this may be achieved by means of a specific SRS configuration (referred to herein as SRS configuration type B) combined with a specific SRS trigger type (referred to herein as SRS trigger type B).

In an embodiment, a specific operation is defined for terminals configured for SRS configuration type B. According to this embodiment, the UE ignores cell specific SRS subframe configuration when determining if the last symbol of the subframe is available for transmission of PUSCH, or SRS, or is left empty. For example, in this embodiment, the uplink grant may contain the information, for instance in a SRS trigger type B, if the last symbol of the subframe is used for PUSCH, for SRS, or if the symbol is left empty. The possibility of leaving the last symbol empty can prevent collision between PUSCH and SRS transmission from other terminals. In other words, the possibility for dynamic muting of the last symbol facilitates SRS transmission from other terminals on subframes that are not contained in the cell specific SRS subframe configuration. An example way to enable keeping the last PUSCH SC-FDMA empty is to define zero-power SRS configuration, i.e., a transmission similar to SRS in terms of, for example, bandwidth but with zero power. This allows for flexible muting of the last PUSCH symbol, making it easier to align the PUSCH/SRS transmission of different users.

According to an embodiment, SRS configuration type B can be defined by using existing SRS configuration and related parameters. In one embodiment, usage of SRS trigger type B is combined with SRS configuration type B only. The UE can support multiple parallel SRS configuration type B, in addition to existing SRS configurations.

Further, in an embodiment, some of the existing SRS configuration parameters can be optimized to support improved functionality with SRS configuration type B. For example, SRS Periodicity (TSRS) of 1 ms could be supported with SRS configuration type B (due to the fact that SRS configuration type B does not introduce any overhead in the case SRS is not triggered). Cell specific SRS subframe configuration can still be used in the cell by earlier release UEs (e.g., prior to Release 11) and UEs not configured for the new mode provided by embodiments of the invention, such as UEs performing initial access in the small cell. However, the density (or periodicity) of cell specific SRS subframe configuration can be considerably decreased (or periodicity increased) with the use of embodiments of invention.

There can be pre-defined priorities defined between different trigger types (i.e., trigger type 0/1 based on existing SRS procedure and SRS trigger type B). According to an embodiment, SRS trigger type B would have the highest priority compared to trigger type 0 or 1. This would allow, for example, a Release 12 UE to transmit PUSCH via resources configured for cell specific SRS (assuming that those resources are not actually used for transmitting SRS).

According to an embodiment, one additional bit may be included in the uplink grant. The additional bit, e.g., "PUSCH in the last symbol bit", can be used to inform whether the last symbol of the subframe is available for PUSCH. When aperiodic SRS is used, one bit in the UL grant, i.e., a "SRS request bit" informs the UE whether it should send SRS. In one embodiment, the "SRS request bit" and "PUSCH in the last symbol bit" may be interpreted jointly as follows:
- A straightforward interpretation of the two bits may include:
   ▪ '00' do not transmit SRS, puncture PUSCH;
   ▪ '01' do not transmit SRS, transmit PUSCH in the last symbol;
   ▪ '10' transmit SRS, puncture PUSCH;
   ▪ '11' transmit SRS, transmit PUSCH (transmissions must be in nonoverlapping PRBs). Simultaneous SRS and PUSCH in the same cell may not be considered as valid option, so this combination may be replaced by another interpretation, as discussed below.
- With two different SRS configurations, an interpretation of the two bits may include:
   ▪ '00' do not transmit SRS, puncture PUSCH;
   ▪ '01' do not transmit SRS, transmit PUSCH in the last symbol;
   ▪ '10' transmit SRS config 1, puncture PUSCH;
   ▪ '11' transmit SRS config 2, puncture PUSCH.

In an embodiment, there could also be a 2-bit indication for "PUSCH in the last symbol", for example, so that the bits are interpreted in the following way:
▪ '00' puncture PUSCH in the last symbol;
▪ '01' transmit part of the allocated PUSCH PRBs;
▪ '10' transmit another part of the allocated PUSCH PRBs;
▪ '11' transmit PUSCH.

One of the issues to solve with SRS trigger type B is the procedure to be used with hybrid automatic repeat request (HARQ) re-transmissions (where the trigger bits are not available). According to an embodiment, one approach may be to have the HARQ re-transmissions follow a pre-defined codepoint of SRS trigger type B, e.g., '01' do not transmit SRS and transmit PUSCH in the last symbol. Alternatively, another embodiment may follow puncturing rules defined for overlapping cell-specific SRS (if configured). In situations where the eNB wants to change the SRS strategy for the retransmissions, it can use scheduled adaptive re-transmission.

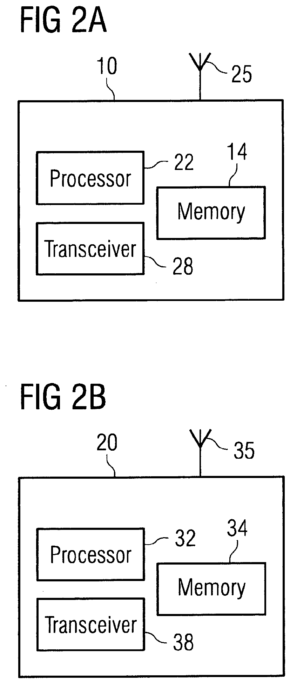

Fig. 2a illustrates an example of an apparatus 10 according to an embodiment. In one embodiment, apparatus 10 may be a base station, such as a node B or eNB. It should be noted that one of ordinary skill in the art would understand that apparatus 10 may include components or features not shown in Fig. 2a. Only those components or feature necessary for illustration of the invention are depicted in Fig. 2a.

As illustrated in Fig. 2a, apparatus 10 includes a processor 22 for processing information and executing instructions or operations. Processor 22 may be any type of general or specific purpose processor. While a single processor 22 is shown in Fig. 2a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 further includes a memory 14, which may be coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

Apparatus 10 may also include one or more antennas 25 for transmitting and receiving signals and/or data to and from apparatus 10. Apparatus 10 may further include a transceiver 28 configured to transmit and receive information. For instance, transceiver 28 may be configured to modulate information on to a carrier waveform for transmission by the antenna(s) 25 and demodulates information received via the antenna(s) 25 for further processing by other elements of apparatus 10. In other embodiments, transceiver 28 may be capable of transmitting and receiving signals or data directly.

Processor 22 may perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 stores software modules that provide functionality when executed by processor 22. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

As mentioned above, according to one embodiment, apparatus 10 may be a base station, such as a node B or eNB, for example. In an embodiment, apparatus 10 may be controlled by memory 14 and processor 22 to incorporate, into an uplink grant message, information on whether a last symbol of the uplink frame structure is used for PUSCH, is used for sounding reference signal (SRS), or is left empty. Apparatus 10 may be controlled by memory 14 and processor 22 to transmit the uplink grant message comprising the information on the last symbol to a UE. In one embodiment, the information is a new SRS trigger type (e.g., SRS trigger type B). In one embodiment, the new SRS trigger type (e.g., SRS trigger type B) has a higher priority than existing SRS trigger types (e.g., trigger type 0 or 1).

According to an embodiment, apparatus 10 may be controlled by memory 14 and processor 22 to incorporate a single bit in the uplink grant message to indicate whether the last symbol is available for PUSCH, and another bit in the uplink grant message to indicate whether the UE should send SRS. The one bit indicating whether the last symbol is available for PUSCH and the one bit indicating whether the UE should send sounding reference signal (SRS) may be interpreted jointly, for example, according to the following:
- '00' indicates to not transmit SRS, and puncture PUSCH;
- '01' indicates to not transmit SRS, and transmit PUSCH in the last symbol;
- '10' indicates to transmit SRS, and puncture PUSCH;
- '11' indicates to transmit SRS, and transmit PUSCH.

In one embodiment, a first and a second SRS configuration are provided, in which case the one bit indicating whether the last symbol is available for PUSCH and the one bit indicating whether the UE should send sounding reference signal (SRS) may be interpreted jointly, for example, according to the following:
- '00' indicates to not transmit SRS, and puncture PUSCH;
- '01' indicates to not transmit SRS, and transmit PUSCH in the last symbol;
- '10' indicates to transmit first SRS configuration, and puncture PUSCH;
- '11' indicates to transmit second SRS configuration, and puncture PUSCH.

In another embodiment, apparatus 10 may be controlled by memory 14 and processor 22 to incorporate two bits in the uplink grant message to indicate whether the last symbol is available for physical uplink shared channel (PUSCH). According to this embodiment, the two bits in the uplink grant message indicating whether the last symbol is available for physical uplink shared channel (PUSCH) may be interpreted according to the following:
- '00' indicates to puncture PUSCH in the last symbol;
- '01' indicates to transmit part of the allocated PUSCH physical resource blocks (PRBs);
- '10' indicates to transmit another part of the allocated PUSCH PRBs;
- '11' indicates to transmit PUSCH.

According to an embodiment, apparatus 10 may be controlled by memory 14 and processor 22 to define a zero-power sounding reference signal (SRS) configuration to allow for flexible muting of the last symbol. Further, in one embodiment, if the new sounding reference signal (SRS) trigger type is used with hybrid automatic repeat request (HARQ) re-transmissions, the hybrid automatic repeat request (HARQ) re-transmissions can follow a pre-defined codepoint of the new sounding reference signal (SRS) trigger type or can follow puncturing rules defined for overlapping cell-specific sounding reference signal (SRS) resources.

Fig. 2b illustrates an example of an apparatus 20 according to another embodiment. In an embodiment, apparatus 20 may be a UE. It should be noted that one of ordinary skill in the art would understand that apparatus 20 may include components or features not shown in Fig. 2b. Only those components or feature necessary for illustration of the invention are depicted in Fig. 2b.

As illustrated in Fig. 2b, apparatus 20 includes a processor 32 for processing information and executing instructions or operations. Processor 32 may be any type of general or specific purpose processor. While a single processor 32 is shown in Fig. 2b, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 20 further includes a memory 34, which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 can be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

Apparatus 20 may also include one or more antennas 35 for transmitting and receiving signals and/or data to and from apparatus 20. Apparatus 20 may further include a transceiver 38 configured to transmit and receive information. For instance, transceiver 38 may be configured to modulate information on to a carrier waveform for transmission by the antenna(s) 35 and demodulates information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

As mentioned above, according to one embodiment, apparatus 20 may be a UE. In this embodiment, apparatus 20 may be controlled by memory 34 and processor 32 to receive an uplink grant message comprising information indicating whether a last symbol of an uplink frame structure is used for physical uplink shared channel (PUSCH), for sounding reference signal (SRS), or is empty. Apparatus 20 may then be controlled by memory 34 and processor 32 to determine from the received new sounding reference signal (SRS) trigger whether the last symbol is available for physical uplink shared channel (PUSCH), or for sounding reference signal (SRS), or is to be left empty.

As discussed above, the information included in the uplink grant message may be a new SRS trigger type (e.g., SRS trigger type B) that may have a higher priority than existing SRS trigger types (e.g., trigger type 0 or 1). In addition, apparatus 20 may be controlled to determine whether or not to transmit SRS or PUSCH in the last symbol and/or whether to puncture PUSCH according to the interpretation of bits in the uplink grant message discussed above in connection with Fig. 2a.

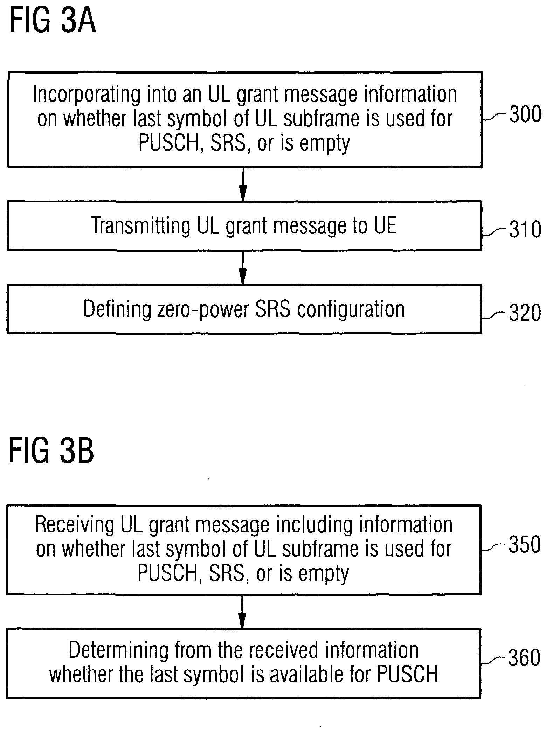

Fig. 3a illustrates an example of a flow chart of a method for controlling SRS transmission, according to one embodiment. In one example, the method of Fig. 3a may be performed by a base station, such as a node B or eNB. As illustrated in the example of Fig. 3a, the method may include, at 300, incorporating, into an uplink grant message, information on whether a last symbol of an uplink frame structure is used for PUSCH, for SRS, or is empty. The method may also include, at 310, transmitting the uplink grant message comprising the information on the last symbol to a UE. In one embodiment, the method may also include, at 320, defining a zero-power SRS configuration.

Fig. 3b illustrates an example of a flow chart of a method for controlling SRS transmission, according to another embodiment. In one example, the method of Fig. 3b may be performed by a UE. As illustrated in the example of Fig. 3b, the method may include, at 350, receiving an uplink grant message comprising information indicating whether a last symbol of an uplink frame structure is used for physical uplink shared channel (PUSCH), for sounding reference signal (SRS), or is left empty. The method may then include, at 360, determining from the received information whether the last symbol is available for physical uplink shared channel (PUSCH), or for sounding reference signal (SRS), or is to be left empty.

In some embodiments, the functionality of any of the methods described herein, such as those of Figs. 3a and 3b, may be implemented by software stored in memory or other computer readable or tangible media, and executed by a processor. In other embodiments, the functionality may be performed by hardware, for example through the use of an application specific integrated circuit (ASIC), a programmable gate array (PGA), a field programmable gate array (FPGA), or any other combination of hardware and software.

The computer readable media mentioned above may be at least partially embodied by a transmission line, a compact disk, digital-video disk, a magnetic disk, holographic disk or tape, flash memory, magnetoresistive memory, integrated circuits, or any other digital processing apparatus memory device.

Embodiments of the invention can provide several advantages. For example, certain embodiments allow for faster triggering and improved latency for aperiodic SRS without any increase in the SRS overhead, as aperiodic SRS transmission does not need to "wait" for cell-specific SRS resources. In addition, the overhead due to resources reserved for SRS but not used can be avoided. The implementation complexity according to certain embodiments is very minor. Also, embodiments are fully backwards compatible in the sense that legacy UE(s) supporting the feature do not suffer from it at all.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

## Claims

1. A method, comprising:
incorporating (300) into an uplink grant message, by a base station in a communications system, information on whether a last symbol of an uplink subframe that is reserved by the base station for sounding reference signal, SRS, transmissions according to a cell-specific SRS subframe configuration, is available for a physical uplink shared channel, PUSCH; and
transmitting (310) the uplink grant message comprising the information on the last symbol to a user equipment, UE, wherein the UE is configured to ignore the cell-specific SRS subframe configuration when determining whether the last symbol of the uplink subframe is available for transmission of the PUSCH, and
wherein the incorporating comprises incorporating one bit in the uplink grant message to indicate whether the last symbol is available for the PUSCH, and incorporating one bit in the uplink grant message to indicate whether the UE should send the SRS, wherein said bits are interpreted jointly, and wherein:
a first combination of said bits indicates to not transmit the SRS, and puncture the PUSCH;
a second combination of said bits indicates to not transmit the SRS, and transmit the PUSCH in the last symbol;
a third combination of said bits indicates to transmit the SRS, and puncture the PUSCH; and
a fourth combination of said bits indicates to transmit the SRS, and transmit the PUSCH.

2. An apparatus (10), comprising:
means for incorporating (300) into an uplink grant message information on whether a last symbol of an uplink subframe that is reserved by a base station for sounding reference signal, SRS, transmissions according to a cell-specific SRS subframe configuration, is available for a physical uplink shared channel, PUSCH; and
means for transmitting (310) the uplink grant message comprising the information on the last symbol to a user equipment, UE, wherein the UE is configured to ignore the cell-specific SRS subframe configuration when determining whether the last symbol of the uplink subframe is available for transmission of the PUSCH, and
wherein the incorporating comprises incorporating one bit in the uplink grant message to indicate whether the last symbol is available for the PUSCH, and incorporating one bit in the uplink grant message to indicate whether the UE should send the SRS, wherein said bits are interpreted jointly, and wherein:
a first combination of said bits indicates to not transmit the SRS, and puncture the PUSCH;
a second combination of said bits indicates to not transmit the SRS, and transmit the PUSCH in the last symbol;
a third combination of said bits indicates to transmit the SRS, and puncture the PUSCH; and
a fourth combination of said bits indicates to transmit the SRS, and transmit the PUSCH.

3. A method, comprising:
receiving (350), by a user equipment (20), an uplink grant message for a physical uplink shared channel, PUSCH, comprising information indicating whether a last symbol of an uplink subframe that is reserved by a base station for sounding reference signal, SRS, transmissions according to a cell-specific SRS subframe configuration, is available for the PUSCH; and
determining (360) from the received information whether the last symbol is available for the PUSCH.
wherein the user equipment (20) is configured to ignore the cell specific SRS subframe configuration when determining whether the last symbol of the uplink subframe is available for transmission of the PUSCH, and
wherein the information comprises one bit in the uplink grant message to indicate whether the last symbol is available for the PUSCH, and one bit in the uplink grant message to indicate whether the UE should send the SRS, wherein said bits are interpreted jointly, and wherein:
a first combination of said bits indicates to not transmit the SRS, and puncture the PUSCH;
a second combination of said bits indicates to not transmit the SRS, and transmit the PUSCH in the last symbol;
a third combination of said bits indicates to transmit the SRS, and puncture the PUSCH; and
a fourth combination of said bits indicates to transmit the SRS, and transmit the PUSCH.

4. An apparatus (20), comprising:
means for receiving an uplink grant message for a physical uplink shared channel, PUSCH, comprising information indicating whether a last symbol of an uplink subframe that is reserved by a base station for sounding reference signal, SRS, transmissions according to a cell-specific SRS subframe configuration, is available for the PUSCH; and
means for determining from the received information whether the last symbol is available for the PUSCH,
wherein the apparatus is configured to ignore the cell specific SRS subframe configuration when determining whether the last symbol of the uplink subframe is available for transmission of the PUSCH, and
wherein the information comprises one bit in the uplink grant message to indicate whether the last symbol is available for the PUSCH, and one bit in the uplink grant message to indicate whether the UE should send the SRS, wherein said bits are interpreted jointly, and wherein:
a first combination of said bits indicates to not transmit the SRS, and puncture the PUSCH;
a second combination of said bits indicates to not transmit the SRS, and transmit the PUSCH in the last symbol;
a third combination of said bits indicates to transmit the SRS, and puncture the PUSCH; and
a fourth combination of said bits indicates to transmit the SRS, and transmit the PUSCH.

5. A computer program, embodied on a non-transitory computer readable medium, the computer program comprising instructions which, when executed by a computer, cause the computer to carry out a method according to claim 1 or according to claim 3.

## Patentansprüche

1. Verfahren, umfassend:
Inkorporieren (300), in eine Aufwärtsstrecken-Bewilligungsnachricht, durch eine Basisstation in einem Kommunikationssystem, von Informationen darüber, ob ein letztes Symbol in einem Aufwärtsstrecken-Teilrahmen, der durch die Basisstation für Übertragungen von Sondierungsreferenzsignalen, SRS, gemäß einer zellspezifischen SRS-Teilrahmenkonfiguration reserviert ist, für einen physikalischen Aufwärtsstrecken-Gemeinschaftskanal, PUSCH, verfügbar ist; und
Übertragen (310) der Aufwärtsstrecken-Bewilligungsnachricht, der die Informationen über das letzte System umfasst, an eine Benutzerausrüstung, UE, wobei die UE konfiguriert ist, die zellspezifische SRS-Teilrahmenkonfiguration beim Bestimmen, ob das letzte Symbol des Aufwärtsstrecken-Teilrahmens für Übertragung des PUSCH verfügbar ist, zu ignorieren, und
wobei das Inkorporieren umfasst, ein Bit zum Angeben, ob das letzte Symbol für den PUSCH verfügbar ist, in die Aufwärtsstrecken-Bewilligungsnachricht zu inkorporieren und ein Bit zum Angeben, ob die UE das SRS senden sollte, in die Aufwärtsstrecken-Bewilligungsnachricht zu inkorporieren, wobei die Bits gemeinsam interpretiert werden, und wobei:
eine erste Kombination der Bits angibt, nicht das SRS zu übertragen und den PUSCH zu durchstechen;
eine zweite Kombination der Bits angibt, nicht das SRS zu übertragen und den PUSCH in dem letzten Symbol zu übertragen;
eine dritte Kombination der Bits angibt, das SRS zu übertragen und den PUSCH zu durchstechen; und
eine vierte Kombination der Bits angibt, das SRS zu übertragen und den PUSCH zu übertragen.

2. Vorrichtung (10), umfassend:
Mittel zum Inkorporieren (300), in eine Aufwärtsstrecken-Bewilligungsnachricht, von Informationen darüber, ob ein letztes Symbol eines Aufwärtsstrecken-Teilrahmens, der durch eine Basisstation für Übertragungen von Sondierungsreferenzsignalen, SRS, gemäß einer zellspezifischen SRS-Teilrahmenkonfiguration reserviert ist, für einen physikalischen Aufwärtsstrecken-Gemeinschaftskanal, PUSCH, verfügbar ist; und
Mittel zum Übertragen (310) der Aufwärtsstrecken-Bewilligungsnachricht, der die Informationen über das letzte System umfasst, an eine Benutzerausrüstung, UE, wobei die UE konfiguriert ist, die zellspezifische SRS-Teilrahmenkonfiguration beim Bestimmen, ob das letzte Symbol des Aufwärtsstrecken-Teilrahmens für Übertragung des PUSCH verfügbar ist, zu ignorieren, und
wobei das Inkorporieren umfasst, ein Bit zum Angeben, ob das letzte Symbol für den PUSCH verfügbar ist, in die Aufwärtsstrecken-Bewilligungsnachricht zu inkorporieren und ein Bit zum Angeben, ob die UE das SRS senden sollte, in die Aufwärtsstrecken-Bewilligungsnachricht zu inkorporieren, wobei die Bits gemeinsam interpretiert werden, und wobei:
eine erste Kombination der Bits angibt, nicht das SRS zu übertragen und den PUSCH zu durchstechen;
eine zweite Kombination der Bits angibt, nicht das SRS zu übertragen und den PUSCH in dem letzten Symbol zu übertragen;
eine dritte Kombination der Bits angibt, das SRS zu übertragen und den PUSCH zu durchstechen; und
eine vierte Kombination der Bits angibt, das SRS zu übertragen und den PUSCH zu übertragen.

3. Verfahren, umfassend:
Empfangen (350), durch eine Benutzerausrüstung (20), einer Aufwärtsstrecken-Bewilligungsnachricht für einen physikalischen Aufwärtsstrecken-Gemeinschaftskanal, PUSCH, umfassend Informationen darüber, ob ein letztes Symbol eines Aufwärtsstrecken-Teilrahmens, der durch eine Basisstation für Übertragungen von Sondierungsreferenzsignalen, SRS, gemäß einer zellspezifischen SRS-Teilrahmenkonfiguration reserviert ist, für den PUSCH verfügbar ist; und
Bestimmen (360) aus den empfangenen Informationen, ob das letzte Symbol für den PUSCH verfügbar ist,
wobei die Benutzerausrüstung (20) konfiguriert ist, die zellspezifische SRS-Teilrahmenkonfiguration beim Bestimmen, ob das letzte Symbol des Aufwärtsstrecken-Teilrahmens für Übertragung des PUSCH verfügbar ist, zu ignorieren, und
wobei die Informationen ein Bit in der Aufwärtsstrecken-Bewilligungsnachricht umfassen, um anzugeben, ob das letzte Symbol für den PUSCH verfügbar ist, und ein Bit in der Aufwärtsstrecken-Bewilligungsnachricht, um anzugeben, ob die UE das SRS senden sollte, wobei die Bits gemeinsam interpretiert werden, und wobei:
eine erste Kombination der Bits angibt, nicht das SRS zu übertragen und den PUSCH zu durchstechen;
eine zweite Kombination der Bits angibt, nicht das SRS zu übertragen und den PUSCH in dem letzten Symbol zu übertragen;
eine dritte Kombination der Bits angibt, das SRS zu übertragen und den PUSCH zu durchstechen; und
eine vierte Kombination der Bits angibt, das SRS zu übertragen und den PUSCH zu übertragen.

4. Vorrichtung (20), umfassend:
Mittel zum Empfangen einer Aufwärtsstrecken-Bewilligungsnachricht für einen physikalischen Aufwärtsstrecken-Gemeinschaftskanal, PUSCH, umfassend Informationen darüber, ob ein letztes Symbol eines Aufwärtsstrecken-Teilrahmens, der durch eine Basisstation für Übertragungen von Sondierungsreferenzsignalen, SRS, gemäß einer zellspezifischen SRS-Teilrahmenkonfiguration reserviert ist, für den PUSCH verfügbar ist; und
Mittel zum Bestimmen aus den empfangenen Informationen, ob das letzte Symbol für den PUSCH verfügbar ist,
wobei die Vorrichtung konfiguriert ist, die zellspezifische SRS-Teilrahmenkonfiguration beim Bestimmen, ob das letzte Symbol des Aufwärtsstrecken-Teilrahmens für Übertragung des PUSCH verfügbar ist, zu ignorieren, und
wobei die Informationen ein Bit in der Aufwärtsstrecken-Bewilligungsnachricht umfassen, um anzugeben, ob das letzte Symbol für den PUSCH verfügbar ist, und ein Bit in der Aufwärtsstrecken-Bewilligungsnachricht, um anzugeben, ob die UE das SRS senden sollte, wobei die Bits gemeinsam interpretiert werden, und wobei:
eine erste Kombination der Bits angibt, nicht das SRS zu übertragen und den PUSCH zu durchstechen;
eine zweite Kombination der Bits angibt, nicht das SRS zu übertragen und den PUSCH in dem letzten Symbol zu übertragen;
eine dritte Kombination der Bits angibt, das SRS zu übertragen und den PUSCH zu durchstechen; und
eine vierte Kombination der Bits angibt, das SRS zu übertragen und den PUSCH zu übertragen.

5. Computerprogramm, verkörpert in einem nichtflüchtigen computerlesbaren Medium, das Computerprogramm Anweisungen umfassend, die, wenn sie durch einen Computer ausgeführt werden, bewirken, dass der Computer ein Verfahren nach Anspruch 1 oder nach Anspruch 3 ausführt.

## Revendications

1. Procédé, comprenant :
l'incorporation (300), dans un message d'attribution sur voie montante, par une station de base dans un système de communication, d'informations indiquant si un dernier symbole d'une sous-trame sur voie montante qui est réservé, par la station de base, pour des transmissions d'un signal de référence de sondage, noté SRS, selon une configuration de sous-trame de SRS spécifique de cellule, est disponible pour un canal physique partagé sur voie montante, noté PUSCH ; et
la transmission (310) du message d'attribution sur voie montante comprenant les informations concernant le dernier symbole à un équipement utilisateur, noté UE, l'UE étant configuré pour ignorer la configuration de sous-trame de SRS spécifique de cellule lors de la détermination si le dernier symbole de la sous-trame sur voie montante est disponible pour la transmission du PUSCH, et
l'incorporation comprenant l'incorporation d'un bit dans le message d'attribution sur voie montante dans le but d'indiquer si le dernier symbole est disponible pour le PUSCH, et l'incorporation d'un bit dans le message d'attribution sur voie montante dans le but d'indiquer si l'UE doit envoyer le SRS, lesdits bits étant interprétés conjointement, et
une première combinaison desdits bits indiquant de ne pas transmettre le SRS et de poinçonner le PUSCH ;
une deuxième combinaison desdits bits indiquant de ne pas transmettre le SRS et de transmettre le PUSCH dans le dernier symbole ;
une troisième combinaison desdits bits indiquant de transmettre le SRS et de poinçonner le PUSCH ; et
une quatrième combinaison desdits bits indiquant de transmettre le SRS et de transmettre le PUSCH.

2. Appareil (10), comprenant :
des moyens d'incorporation (300), dans un message d'attribution sur voie montante, d'informations indiquant si un dernier symbole d'une sous-trame sur voie montante qui est réservé, par une station de base, pour des transmissions d'un signal de référence de sondage, noté SRS, selon une configuration de sous-trame de SRS spécifique de cellule, est disponible pour un canal physique partagé sur voie montante, noté PUSCH ; et
des moyens de transmission (310) du message d'attribution sur voie montante comprenant les informations concernant le dernier symbole à un équipement utilisateur, noté UE, l'UE étant configuré pour ignorer la configuration de sous-trame de SRS spécifique de cellule lors de la détermination si le dernier symbole de la sous-trame sur voie montante est disponible pour la transmission du PUSCH, et
l'incorporation comprenant l'incorporation d'un bit dans le message d'attribution sur voie montante dans le but d'indiquer si le dernier symbole est disponible pour le PUSCH, et l'incorporation d'un bit dans le message d'attribution sur voie montante dans le but d'indiquer si l'UE doit envoyer le SRS, lesdits bits étant interprétés conjointement, et
une première combinaison desdits bits indiquant de ne pas transmettre le SRS et de poinçonner le PUSCH ;
une deuxième combinaison desdits bits indiquant de ne pas transmettre le SRS et de transmettre le PUSCH dans le dernier symbole ;
une troisième combinaison desdits bits indiquant de transmettre le SRS et de poinçonner le PUSCH ; et
une quatrième combinaison desdits bits indiquant de transmettre le SRS et de transmettre le PUSCH.

3. Procédé, comprenant :
la réception (350), par un équipement utilisateur (20), d'un message d'attribution sur voie montante pour un canal physique partagé sur voie montante, noté PUSCH, comprenant des informations indiquant si un dernier symbole d'une sous-trame sur voie montante qui est réservé, par une station de base, pour des transmissions d'un signal de référence de sondage, noté SRS, selon une configuration de sous-trame de SRS spécifique de cellule, est disponible pour le PUSCH ; et
la détermination (360), à partir des informations reçues, si le dernier symbole est disponible pour le PUSCH,
l'équipement utilisateur (20) étant configuré pour ignorer la configuration de sous-trame de SRS spécifique de cellule lors de la détermination si le dernier symbole de la sous-trame sur voie montante est disponible pour la transmission du PUSCH, et
les informations comprenant un bit dans le message d'attribution sur voie montante dans le but d'indiquer si le dernier symbole est disponible pour le PUSCH, et un bit dans le message d'attribution sur voie montante dans le but d'indiquer si l'UE doit envoyer le SRS, lesdits bits étant interprétés conjointement, et
une première combinaison desdits bits indiquant de ne pas transmettre le SRS et de poinçonner le PUSCH ;
une deuxième combinaison desdits bits indiquant de ne pas transmettre le SRS et de transmettre le PUSCH dans le dernier symbole ;
une troisième combinaison desdits bits indiquant de transmettre le SRS et de poinçonner le PUSCH, et
une quatrième combinaison desdits bits indiquant de transmettre le SRS et de transmettre le PUSCH.

4. Appareil (20), comprenant :
des moyens de réception d'un message d'attribution sur voie montante pour un canal physique partagé sur voie montante, noté PUSCH, comprenant des informations indiquant si un dernier symbole d'une sous-trame sur voie montante qui est réservé, par une station de base, pour des transmissions d'un signal de référence de sondage, noté SRS, selon une configuration de sous-trame de SRS spécifique de cellule, est disponible pour le PUSCH ; et
des moyens de détermination, à partir des informations reçues, si le dernier symbole est disponible pour le PUSCH,
l'appareil étant configuré pour ignorer la configuration de sous-trame de SRS spécifique de cellule lors de la détermination si le dernier symbole de la sous-trame sur voie montante est disponible pour la transmission du PUSCH, et
les informations comprenant un bit dans le message d'attribution sur voie montante dans le but d'indiquer si le dernier symbole est disponible pour le PUSCH, et un bit dans le message d'attribution sur voie montante dans le but d'indiquer si l'UE doit envoyer le SRS, lesdits bits étant interprétés conjointement, et
une première combinaison desdits bits indiquant de ne pas transmettre le SRS et de poinçonner le PUSCH ;
une deuxième combinaison desdits bits indiquant de ne pas transmettre le SRS et de transmettre le PUSCH dans le dernier symbole ;
une troisième combinaison desdits bits indiquant de transmettre le SRS et de poinçonner le PUSCH ; et
une quatrième combinaison desdits bits indiquant de transmettre le SRS et de transmettre le PUSCH.

5. Programme d'ordinateur, incorporé à un support non transitoire lisible par ordinateur, le programme d'ordinateur comprenant des instructions qui, une fois exécutées par un ordinateur, amènent l'ordinateur à mettre en oeuvre un procédé selon la revendication 1 ou selon la revendication 3.
